(19) Europäisches Patentamt
European Patent Office
Office européen des brevets

(11) EP 2 222 734 B1

(12) EUROPEAN PATENT SPECIFICATION

(45) Date of publication and mention
of the grant of the patent:
**18.05.2011 Bulletin 2011/20**

(51) Int Cl.:
*C08F 214/18* (2006.01)    *C08F 220/06* (2006.01)
*D06M 15/256* (2006.01)    *D06M 15/263* (2006.01)
*D06M 15/277* (2006.01)    *D06M 15/576* (2006.01)

(21) Application number: **08842382.7**

(22) Date of filing: **23.10.2008**

(86) International application number:
**PCT/US2008/080947**

(87) International publication number:
**WO 2009/055561 (30.04.2009 Gazette 2009/18)**

(54) **HYDROPHILLIC FLUORINATED SOIL RESIST COPOLYMERS**

HYDROPHILE FLUORIERTE SCHMUTZABWEISENDE COPOLYMERE

COPOLYMÈRES ANTISALISSURE FLUORÉS HYDROPHILES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.10.2007 US 977188**

(43) Date of publication of application:
**01.09.2010 Bulletin 2010/35**

(73) Proprietor: **E. I. du Pont de Nemours and Company**
**Wilmington, DE 19898 (US)**

(72) Inventors:
• **MURPHY, Peter, Michael**
**Chadds Ford**
**Pennsylvania 19317 (US)**
• **REINARTZ, Stefan**
**Wilmington**
**Delaware 19810 (US)**

(74) Representative: **Heinemann, Monica**
**Abitz & Partner**
**Patentanwälte**
**Hörselbergstrasse 5**
**81677 München (DE)**

(56) References cited:
**WO-A-90/12917      JP-A- 8 176 090**
**US-A- 5 210 274     US-A- 5 624 974**

**Description**

FIELD OF THE INVENTION

The present invention relates to a method of treating fibrous substrates with a copolymer to impart soil resistance while imparting minimal water repellency to the substrate. The copolymer is prepared by polymerization of methacrylic acid with certain fluorinated alkylated benzyl isocyanates.

BACKGROUND OF THE INVENTION

Surface effects such as water repellency, soil resistance, and other effects, can be provided to fibrous substrates by various fluorinated polymer compositions. Typically repellency of a broad array of water, soil, and stains is desirable to aid in keeping the substrate clean. However, in certain applications, it is desirable to have good soil resistance without water repellency. For example for a carpet used near or in an entrance or bathroom it is desirable for the carpet to absorb moisture while still having excellent soil repellency. Fluorinated polymers or copolymers that provide resistance to soiling typically also provide water repellency.

Japan Patent Application 1996176090 discloses a fluorinated compound of the formula $CH_2=C(CH_3)C_6H_4$-C$(CH_3)_2$-$NHC(O)OCH_2CH_2$-$(CF_2)_6$-F. This monomer is used to prepare a resin composition, which when cured is useful in lenses or transmission screens used in video projectors for better adhesion to their backing sheet. There is no disclosure or suggestion of use of this monomer compound to prepare treatment agents for fibrous substrates for imparting soil resistance.

It is desirable to provide treatment agents for fibrous substrates that provide excellent soil resistance while permitting retention of water absorption by the substrate. Thus, imparting soil resistance while imparting no or minimal water repellency is desired. The present invention provides such a treatment agent.

BRIEF SUMMARY OF THE INVENTION

In the method of the present invention, a copolymer of Formula I is used:

$$-[R_f\text{-}Q\text{-}OC(O)NHC(CH_3)_2C_6H_4C(CH_3)CH_2\text{-}]_x\text{-}[CH_2C(R)(COOH)\text{-}]_y\text{-} \qquad (I)$$

wherein
$R_f$ is a straight or branched perfluoroalkyl group having from about 2 to about 8 carbon atoms, or a mixture thereof, which is optionally interrupted by at least one oxygen atom,
Q is alkylene of 1 to about 15 carbon atoms, hydroxyalkylene of from about 2 to about 15 carbon atoms, $-O(C_nH_{2n})$-, $-(CH_2CF_2)_m(CH_2)_n$-, $-OCHFCF_2(CH_2)_n$-, $-CONR^1(C_nH_{2n})$- $-(C_nH_{2n}OCONR^1(C_nH_{2n})$-, $(-CONR^1CH_2)_2CH$-, $-SO_2N(R^1)$$(C_nH_{2n})$-, or $-(C_nH_{2n})SO_2N(R^1)(C_nH_{2n})$-,
each $R^1$ is independently H or alkyl of 1 to about 4 carbon atoms,
each n is independently 1 to about 15,
each m is independently 1 to about 4, and
R is H or $CH_3$,
x is a positive integer, and
y is a positive integer.

The present invention comprises a method of providing soil resistance to a fibrous substrate while imparting minimal water repellency comprising contacting the substrate with a copolymer of Formula I as described above.

The present invention further comprises a substrate which has been contacted with a copolymer of Formula I as described above.

DETAILED DESCRIPTION OF THE INVENTION

All trademarks are denoted herein by capitalization.

The term "minimal water repellency" as used herein means water repellency having a rating number less than or equal to 2 in accordance with Test Method 1, Water Repellency Test, as described herein.

The present invention uses a copolymer having repeating units of Formula I in any sequence:

$$-[R_f\text{-}Q\text{-}OC(O)NHC(CH_3)_2C_6H_4C(CH_3)CH_2\text{-}]_x\text{-}[CH_2C(R)(COOH)\text{-}]_y\text{-} \qquad (I)$$

wherein

$R_f$ is a straight or branched perfluoroalkyl group having from about 2 to about 8 carbon atoms, or a mixture thereof, which is optionally interrupted by at least one oxygen atom,
Q is alkylene of 1 to about 15 carbon atoms, hydroxyalkylene of from about 2 to about 15 carbon atoms, $-O(C_nH_{2n})-$, $-(CH_2CF_2)_m(CH2)_n-$, $-OCHFCF_2(CH_2)_n-$, $-CONR^1(C_nH_{2n})-$, $-(C_nH_{2n})OCONR^1(C_nH_{2n})-$, $(-CONR^1CH_2)_2CH-$, $-SO_2N(R^1)(C_nH_{2n})-$, or $-(C_nH_{2n})SO_2N(R^1)(C_nH_{2n})-$each $R^1$ is independently H or alkyl of 1 to about 4 carbon atoms,
each n is independently 1 to about 15,
each m is independently 1 to about 4,
R is H or $CH_3$,
x is a positive integer, and
y is a positive integer.

In Formula 1, $R_f$ is preferably a straight or branched perfluoroalkyl group having from about 2 to about 8 carbon atoms, or a mixture thereof, more preferably from about 2 to about 6 carbon atoms, and more preferably from about 4 to about 6 carbon atoms, or a mixture thereof, optionally interrupted by at least one oxygen atom. Most preferably, the perfluoroalkyl group has six carbon atoms. Typically $R_f$ is interrupted by one to five oxygen atoms, preferably one to three oxygen atoms. R is preferably methyl.

In Formula I, x is preferably from 1 to about 10,000, more preferably from about 1 to about 5000, and more preferably from about 5 to about 2000, or a mixture thereof; and y is preferably from 0 to about 10,000, more preferably from about 1 to about 5000, and more preferably from about 5 to about 2000, or a mixture thereof. The ratio of x to y is from about 0.3 to about 1.5, preferably from about 0.4 to about 1.3, more preferably from about 0.5 to about 1.0.

Examples of preferred Q include $-CH_2CH_2-$, $CH_2CH(OH)CH_2-$, $-O(C_nH_{2n})-$, $-(CH_2CF_2)_mCH_2CH_2-$, $-OCHFCF_2CH_2CH_2-$, $-CONHCH_2CH_2-$, $-CH_2CH_2O-CONHCH_2CH_2-$, $(-CONHCH_2)_2CH-$, $-SO_2N(CH_3)CH_2CH_2-$, or $-SO_2N(C_2H_5)CH_2CH_2-$.

Preferred $R^1$ is H or $CH_3$. Preferred n is 1 to about 10, more preferably 2 to about 8. Preferred m is I to about 3, more preferred is 1 to 2.

The copolymer having repeating units of Formula I is prepared by polymerizing methacrylic or acrylic acid with a compound of Formula II:

$$R_f\text{-Q-OC(O)NHC(CH}_3)_2C_6H_4C(CH_3)=CH_2 \qquad\qquad II$$

wherein $R_f$ and n are defined as in Formula I. The fluorinated copolymers of Formula I are prepared in organic solvent or emulsified in water by free radical initiated polymerization. The fluorinated copolymers of this invention are made by agitating a compound of Formula II and methacrylic acid or acrylic acid in organic solvent or water under an inert atmosphere in a suitable reaction vessel which is equipped with an agitation device and an external heating and cooling device. A free radical initiator and chain transfer agent are added and the mixture is sparged with inert gas for about 30 minutes. The temperature is raised to from about 20° to about 80° C and maintained for several hours. The polymerization initiator is exemplified by 2,2'-azobis(2-amidinopropane dihydrochloride or 2,2'-azobis(isobutyramidine) dihydrochloride. This type of initiator is sold by E. I. du Pont de Nemours and Company, Wilmington, Delaware, commercially under the name of "VAZO". An example of a suitable polymerization regulator or chain transfer agent is dodecylmercaptan. Suitable organic solvents useful in the preparation of the copolymers of Formula I of the present invention include tetrahydrofuran, acetone, methyl isobutyl ketone, isopropanol, ethyl acetate, and mixtures thereof. Isopropanol is preferred. The reaction is conducted under an inert gas, such as nitrogen, to the exclusion of oxygen. The reaction can be followed by gas chromatography or other means to monitor for completeness. The polymer is optionally isolated by precipitation, and optionally purified by conventional means, for example, recrystallization. The solvent is removed by evaporation, or the solution is retained for dilution and application to the substrate. The product of the reaction is a fluorinated copolymer of Formula I.

The compound of Formula II is prepared by reacting a compound of Formula III:

$$(NCO)C(CH_3)_2C_6H_4C(CH_3)=CH_2 \qquad\qquad III$$

with a compound of Formula IV

$$R_f\text{-Q-OH} \qquad\qquad IV$$

wherein $R_f$ and Q are as defined above in Formula 1. The alcohol and isocyanate are mixed with an organic solvent, such as hexane, under an inert atmosphere in a suitable reaction vessel which is equipped with an agitation device and an external heating and cooling device. After cooling to about -5°C, a catalyst, such as dibutyl tin laurate is added over several minutes while maintaining the temperature below about 0°C. The cooling device is removed and the reaction mixture stirred for several hours. The reaction is conducted under an inert gas, such as nitrogen, to the exclusion of oxygen. The reaction can be followed by gas chromatography or other means to monitor for completeness. The compound of Formula II is optionally isolated by solvent removal, precipitation, or other conventional means, and optionally purified by, for example, recrystallization or chromatography. The solvent is typically removed by evaporation.

The compound of Formula III is commercially available from Sigma-Aldrich, Milwaukee, WI or Cytec Industries, West Patterson, NJ. The compound of Formula IV is commercially available from several sources including E. I. du Pont de Nemours and Company, Wilmington, DE; 3M, St. Paul, MN; Daikin Industries, Osaka, Japan; Asahi Glass Company, Tokyo, Japan; Omnova Solutions Inc., Fairlawn OG; and Clariant GmbH, Frankfurt, Germany.

For application to a fibrous substrate the copolymer of Formula I is applied directly to the substrate, diluted in water, or dispersed or dissolved in a solvent. Suitable solvents include simple alcohols or ketones. Alternatively an aqueous dispersion of Formula I is prepared by removing solvents and the use of known emulsification or homogenization procedures. Solvent-free emulsions are preferred for use in the present invention

The present invention relates to a method of providing soil resistance while imparting minimal (little or no) water repellency to a fibrous substrate comprising contacting the substrate with a copolymer of Formula I as defined above. Suitable substrates include fibers, yarns, fabrics, fabric blends, textiles, nonwovens, leather, paper, and carpets. Preferred is carpet.

The solution or dispersion of Formula I of the present invention is applied to the substrate by any suitable method. Such methods include, but are not limited to, application by exhaustion, foam, flex-nip, nip, pad, kiss-roll, beck, skein, winch, liquid injection, overflow flood, roll, brush, roller, spray, dipping, and immersion. It can also be applied by use of the beck dyeing procedure, continuous dyeing procedure or thread-line application.

The fluorinated (meth)acrylate copolymer solution or dispersion is applied to the substrate as such, or in combination with other optional textile finishes or surface treating agents. Such optional additional components include treating agents or finishes to achieve additional surface effects, or additives commonly used with such agents or finishes. Such additional components comprise compounds or compositions that provide surface effects such as no iron, easy to iron, shrinkage control, wrinkle free, permanent press, moisture control, softness, strength, anti-slip, anti-static, anti-snag, anti-pill, stain repellency, stain release, soil repellency, soil release, water repellency, oil repellency, odor control, antimicrobial, sun protection, cleanability and similar effects. One or more of such treating agents or finishes are applied to the substrate before, after, or simultaneously with the copolymer of Formula 1. For example for fibrous substrates, when synthetic or cotton fabrics are treated, use of a wetting agent can be desirable, such as ALKANOL 6112 available from E. I. du Pont de Nemours and Company, Wilmington, DE. When cotton or cotton-blended fabrics are treated, a wrinkle-resistant resin can be used such as PERMAFRESH EFC available from Omnova Solutions, Chester, SC.

Other additives commonly used with such treating agents or finishes are also optionally present such as surfactants, pH adjusters, cross linkers, wetting agents, wax extenders, and other additives known by those skilled in the art. Suitable surfactants include anionic, cationic, nonionic, N-oxides and amphoteric surfactants. Preferred is an anionic surfactant such as sodium lauryl sulfate, available as DUPONOL WAQE or SUPRALATE WAQE from Witco Corporation, Greenwich, CT, or SUPRALATE WAQE available from Witco, Houston TX. Examples of such additives include processing aids, foaming agents, lubricants, and anti-stains. The composition is applied at a manufacturing facility, retailer location, or prior to installation and use, or at a consumer location.

Optionally a blocked isocyanate to further promote durability is added with the copolymer of Formula I (i.e., as a blended composition). An example of a suitable blocked isocyanate to use in the present invention is HYDROPHOBOL XAN available from Ciba Specialty Chemicals, High Point, NJ. Other commercially available blocked isocyanates are also suitable for use herein. The desirability of adding a blocked isocyanate depends on the particular application for the copolymer. For most of the presently envisioned applications, it does not need to be present to achieve satisfactory cross-linking between chains or bonding to the substrate. When added as a blended isocyanate, amounts up to about 20% by weight are added.

Optionally, nonfluorinated extender compositions are also included in the application composition to potentially further increase fluorine efficiency. Examples of such optional additional extender polymer compositions include hydrocarbon copolymers of acrylates, methacrylates, or mixtures thereof. Such copolymers can also include vinylidene chloride, vinyl chloride, or vinyl acetate, or mixtures thereof.

The optimal treatment for a given substrate depends on (1) the characteristics of the fluorinated copolymer, (2) the characteristics of the surface of the substrate, (3) the amount of fluorinated copolymer applied to the surface, (4) the method of application of the fluorinated copolymer onto the surface, and many other factors. Some fluorinated copolymer repellents work well on many different substrates and are repellent to oil, water, and a wide range of other liquids. Other fluorinated copolymer repellents exhibit superior repellency on some substrates or require higher loading levels.

Typically the fibrous substrate is passed through the application apparatus and the copolymer of Formula I is exhausted or deposited onto the substrate from a single application medium, such as a bath, containing the composition of the present invention. The present invention includes the use of a mixture of the copolymer of Formula I optionally with other additives, in a bath or other treatment medium. The composition is applied to the fibrous substrate in a process such as an exhaustion, for example a Beck or Winch method, or by use of other conventional application methods known in the art. These include continuous methods such as, but not limited to, Flex-nip, pad, spray, or foam application. Continuous methods of application can include steaming after application of the composition of the present invention. Optionally, as noted above, other conventional additives may be added to the composition or treatment medium, such as chemicals to adjust pH (for instance urea sulfate, or other acid), sequestering agents (such as ethylene diamine tetraacetic acid), additional surfactants, and leveling agents.

Conventional bath conditions can be used for the contacting medium. For example, for an exhaust application, an application period of from about 5 minutes to about 30 minutes and preferably about 20 minutes is employed. The bath to fiber weight ratio is from about 40:1 to about 2:1. The bath pH is from about 1 to about 9, preferably about 1.5 to about 5.0, and more preferably about 1.8 to about 3.0. The bath temperature is from about 60°F to about 200°F (from about 16°C to about 93°C), more preferably from about 80°F to about 200°F (from about 27°C to about 93°C), and more preferably about 190°F (about 88°C). Lower pH and higher temperature improve exhaust efficiency but the more extreme conditions may adversely affect equipment. These conditions are balanced with operating and maintenance costs. After application of the composition of the present invention to the substrate, the fibrous substrate is rinsed and dried conventionally.

In addition to exhaust application, the copolymer of Formula I can be directly deposited onto the fibrous substrate by means of spray or foam application methods and equipment, either during the manufacturing of or after the installation of the fibrous substrate. Optionally other conventional additives, as described above, can be added to the composition or treatment medium. The bath to fiber weight ratio for conventional spray or foam application is from about 1:30 to about 1:4.

The amount of the composition of the present invention contacting the substrate is from about 0.01 % to about 3% solids on weight of fiber, preferably from about 0.1 % to about 3% solids on weight of fiber, more preferably from about 0.5 to about 3% solids on weight of fiber, and more preferably from about 0.5 to about 2% solids on weight of fiber.

The present invention further comprises a substrate treated with the composition of the present invention as disclosed above. Most any fibrous substrate is suitable for treatment by the compositions and methods of the present invention. Such substrates include fibers, yarns, fabrics, fabric blends, textiles, carpet, rugs, nonwovens, leather and paper. The term "fiber" includes fibers and yarns, before and after spinning, of a variety of compositions and forms, and includes pigmented fibers and pigmented yarns. By "fabrics" is meant natural or synthetic fabrics, or blends thereof, composed of fibers such as cotton, rayon, silk, wool, polyester, polypropylene, polyolefins, nylon, and aramids such as "NOMEX" and "KEVLAR". By "fabric blends" is meant fabric made of two or more different fibers. Typically these blends are a combination of at least one natural fiber and at least one synthetic fiber, but also can be a blend of two or more natural fibers and/or of two or more synthetic fibers. The preferred substrates are carpets. Carpets, for example, can be made of cotton, wool, silk, nylon, acrylics, aromatic polyamides, polyesters, jute, sisal, and other cellulosics. The treated substrates of the present invention have excellent soil resistance, but retain the ability to absorb moisture, so have minimum water repellency.

The copolymers and method of the present invention are useful to treat fibrous substrates to impart soil resistance, but without imparting a high level of water repellency. Thus the treated substrates of the present invention retain the property of moisture absorption while having a high level of resistance to soiling. Such properties are especially useful in applications where moisture absorption is desirable, such as in clothing, or in carpeting for use in or near entrances and bathrooms, where both resistance to soiling and moisture absorption simultaneously are desirable. Such surface properties help to maintain surface cleanliness while permitting moisture absorption in use.

TEST METHODS

The following test methods were used in the examples herein.

Test Method 1 - Water Repellency Test

The water repellency of a treated substrate was measured according to AATCC standard Test Method No. 193-2004 and the DuPont Technical Laboratory Method as outlined in the TEFLON Global Specifications and Quality Control Tests information packet. The test determines the resistance of a treated substrate to wetting by aqueous liquids. Drops of water-alcohol mixtures of varying surface tensions are placed on the substrate and the extent of surface wetting is determined visually.

The composition of water repellency test liquids is shown in Table 1.

Table 1

| Water Repellency Rating Number | Composition, Volume % | Composition, Volume % |
|---|---|---|
| | Isopropyl Alcohol | Distilled Water |
| 1 | 2 | 98 |
| 2 | 5 | 95 |
| 3 | 10 | 90 |
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

Three drops of Test Liquid 1 are placed on the treated substrate. After 10 seconds, the drops are removed by using vacuum aspiration. If no liquid penetration or partial absorption (appearance of a darker wet patch on the substrate) is observed, the test is repeated with Test Liquid 2. The test is repeated with Test Liquid 3 and progressively higher Test Liquid numbers until liquid penetration (appearance of a darker wet patch on the substrate) is observed. The test result is the highest Test Liquid number that does not penetrate into the substrate. Higher scores indicate greater repellency.

Test Method 2 - Accelerated Soiling Test

A drum mill (on rollers) was used to tumble synthetic soil onto carpet samples. Synthetic soil was prepared as described in AATCC Test Method 123-2000, Section 8. Soil-coated beads were prepared as follows. Synthetic soil, 3 g, and 1 liter of clean nylon resin beads (SURLYN ionomer resin beads 1/8 - 3/16 inch (0.32 - 0.48 cm) diameter were placed into a clean, empty canister. SURLYN is an ethylene/methacrylic acid copolymer, available from E. I. du Pont de Nemours and Co., Wilmington DE). The canister lid was closed and sealed with duct tape and the canister rotated on rollers for 5 minutes. The soil-coated beads were removed from the canister. Carpet samples were prepared as follows. The carpet material used was a commercial level loop (LL) 1245 denier, 1/10 gauge (0.1 inch or 2.5 mm tuft separation), 26 oz/yd$^2$ (0.88 kg/m$^2$), dyed pale yellow and available from Invista Inc., Wilmington DE. Total carpet sample size was 8 x 25 inches (20.3 x 63.5 cm) for these tests. One test sample and one control sample were tested at the same time. The carpet pile of all samples was laid in the same direction. The shorter side of each carpet sample was cut in the machine direction (with the tuft rows). Strong adhesive tape was placed on the backside of the carpet pieces to hold them together. The carpet samples were placed in the clean, empty drum mill with the tufts facing toward the center of the drum. The carpet was held in place in the drum mill with rigid wires. Soil-coated resin beads, 250 cc, and 250 cc of ball bearings (5/16 inch, 0.79 cm diameter) were placed into the drum mill. The drum mill lid was closed and sealed with duct tape. The drum was run on the rollers for 2 1/2 minutes at 105 rpm. The rollers were stopped and the direction of the drum mill reversed. The drum was run on the rollers for an additional 2 1/2 minutes at 105 rpm. The carpet samples were removed and vacuumed uniformly to remove excess dirt. The soil-coated beads were discarded.

The Delta E color difference for the soiled carpet was measured for the test and control items versus the original unsoiled carpet. Color measurement of each carpet was conducted on the carpet following the accelerated soiling test. For each control and test sample the color of the carpet was measured, the sample was soiled, and the color of the soiled carpet was measured. The Delta E is the difference between the color of the soiled and unsoiled samples, expressed as a positive number. The color difference was measured on each item, using a Minolta Chroma Meter CR-310. Color readings were taken at five different areas on the carpet sample, and the average Delta E was recorded. The control carpet for each test item was of the same color and construction as the test item, but without treatment with a composition of the present invention. The control carpet had not been treated with any fluorochemical.

The surface effects on carpet including soil resistance and/or soil release are measured by the percentage of soil blocked. The percentage of soil blocked after drum soil as " % cleaner than untreated " was calculated by following

calculations:

$$\text{\% Cleaner than untreated} =$$

$$\frac{[(\text{Delta E of soiled untreated carpet}) - (\text{Delta E of soiled treated carpet})] \times 100\%}{(\text{Delta E of soiled untreated carpet})}$$

Use of this value corrects for different carpet color and constructions and permits meaningful comparisons between data sets. A higher percentage indicates greater soil resistance.

EXAMPLES

Example 1

1,1,2,2-tetrahydroperfluorooctan-1-ol (6.4 grams, 18 mmoles), 3-isopropenyl-a,a-dimethylbenzyl isocyanate (TMI, 3.6 grams, 18 mmoles), and 50mL of dry hexanes were combined in a multi-neck flask with condenser, nitrogen inlet-outlet, magnetic bar and stirrer, and temperature probe. After cooling to -5°C, dibutyl tin dilaurate (0.09 grams) was added over 15 minutes while maintaining the temperature below 0°C. The cooling bath was removed and the reaction mixture was allowed to stir at room temperature (about 15°C) for one day. Cooling to -20°C gave 7.5 grams (75% of theoretical yield) of a colorless solid, which was confirmed by 1H and 13C NMR to be 3,3,4,4,5,5,6,6,7,7,8,8,8-tridecafluorooctyl-2-(3-(prop-1-en-2-yl)phenyl)propan-ylcarbamate.
The 3,3,4,4,5,5,6,6,7,7,8,8,8-tridecafluorooctyl-2-(3-(prop-1-en-2-yl)phenyl)propan-ylcarbamate (5.0 grams, 9.6 mmoles), methacrylic acid (0.70 grams, 8.1 mmoles), 0.30 grams dodecyl mercaptan, 0.75 grams of VAZO 67, and 100 mL of 2-propanol were combined in a multi-neck flask with condenser, nitrogen inlet-outlet, mechanical stirrer, and temperature probe, After stirring at room temperature and nitrogen purge/sparge for 30 minutes, all of the ingredients dissolved. The temperature was raised to 70°C and maintained at 70°C +/- 5°C for 16 hours under nitrogen blanket. Gas chromatography analysis of the reaction mixture showed that less than 5% of the monomers remained. The reaction mixture was allowed to cool to room temperature, over two hours, and 200mL deionized water was added. The pH was adjusted to about 8.5 with aqueous sodium hydroxide. The 2-propanol solvent was removed by reduced pressure evaporation. Additional water was added for a total of about 200mL of aqueous solution of anionic fluorinated polymer. This Example 1 product was applied to 28 ounces per square yard (0.95 kg/m$^2$) level loop ANTRON LEGACY commercial carpet dyed medium yellow and backed with styrene-butadiene rubber latex available from Invista, Kennesaw, GA. An 8 inch (20.3 cm) carpet square was uniformly wet using spray application with water in an amount equal to 25% of the weight of the dried carpet fiber; i.e. 25% wet pickup of the water on the dry carpet fiber. An application bath of 44.4 grams of the Example 1 product and 55.6 grams of water was prepared and 10.2 grams of this bath were uniformly spray applied onto the 8 inch (20.3 cm) carpet square until a wet pick up of approximately 25% was achieved. The treated carpet square was dried in a forced air oven at 250°F (121°C) for 30 minutes. The treated carpet was tested for water repellency and soil resistance using Test Methods 1 and 2. The resulting data is in Table 2.

Example 2

The 3,3,4,4,5,5,6,6,7,7,8,8,8-tridecafluorooctyl-2-(3-(prop-1-en-2-yl)phenyl)propan-ylcarbamate (5.0 grams, 9.6 mmoles) prepared as in Example 1, methacrylic acid (1.6 grams, 19 mmoles), 0.30 grams dodecyl mercaptan, 0.75 grams of Vazo 67, and 100 mL of 2-propanol were combined in a multi-neck flask with condenser, nitrogen inlet-outlet, mechanical stirrer, and temperature probe, After stirring at room temperature and nitrogen purge/sparge for 30 minutes, all of the ingredients dissolved. The temperature was raised to 70°C and maintained at 70°C +/- 5°C for 16 hours under nitrogen blanket. Gas chromatography analysis of the reaction mixture showed that less than 5% of the monomers remained. The reaction mixture was allowed to cool to room temperature, over two hours, and 200mL deionized water was added. The pH was adjusted to about 8.5 with aqueous sodium hydroxide. The 2-propanol solvent was removed by reduced pressure evaporation. Additional water was added for a total of about 200mL of aqueous solution of anionic, fluorinated polymer. Carpet was treated with the copolymer of Example 2 as described in Example 1 but with the application of 10.4 grams of an application bath of 26.7 grams of Example 2 copolymer and 73.3 grams of water. The carpet treated with Example 2 copolymer was tested for water repellency and soil resistance using Test Methods 1 and 2. The resulting data is in Table 2.

Example 3

1,1,2,2-tetrahydroperfluorohexan-1-ol (17.0 grams, 64 mmoles), 3-isopropenyl-$\alpha,\alpha$-dimethylbenzyl isocyanate (TMI, 13.0 grams, 64 mmoles), and 50m of dry hexane were combined in a multi-neck flask with condenser, nitrogen inlet-outlet, magnetic bar and stirrer, and temperature probe. After cooling to -5°C, dibutyl tin dilaurate (0.33 grams) was added over 15 minutes while maintaining the temperature below 0°C. The cooling bath was removed and the reaction mixture was allowed to stir at room temperature (about 15°C) for three days. Flash chromatography with silica using 15 weight% ethyl acetate in hexane gave 25.2 grams (84% of theoretical yield) of a colorless oil, which was confirmed by 1H and 13C NMR to be 3,3,4,4,5,5,6,6,6-nonafluorohexyl-2-(3-(prop-1-en-2-yl)phenyl)propan-ylcarbamate.

The 3,3,4,4,5,5,6,6,6-nonafluorohexyl-2-(3-(prop-1-en-2-yl)phenyl)propan-ylcarbamate (6.7 grams, 16 mmoles), methacrylic acid (1.2 grams, 14 mmoles), 0.30 grams dodecyl mercaptan, 0.75 grams of VAZO 67, and 100 mL of 2-propanol were combined in a multi-neck flask with condenser, nitrogen inlet-outlet, mechanical stirrer, and temperature probe, After stirring at room temperature and nitrogen purge/sparge for 30 minutes, all of the ingredients dissolved. The temperature was raised to 70°C and maintained at 70°C +/- 5°C for 16 hours under nitrogen blanket. Gas chromatography analysis of the reaction mixture showed that less than 5% of the monomers remained. The reaction mixture was allowed to cool to room temperature, over two hours, and 200mL deionized water was added. The pH was adjusted to about 8.5 with aqueous sodium hydroxide. The 2-propanol solvent was removed by reduced pressure evaporation. Additional water was added for a total of about 200mL of aqueous solution of anionic fluorinated polymer. Carpet was treated with this Example 3 copolymer as in Example 1 but with the application of 10.8 grams of an application bath of 38.8 grams of Example 3 copolymer and 61.2 grams of water. The treated carpet was tested for water repellency and soil resistance using Test Methods 1 and 2. The resulting data is in Table 2.

Table 2

| Example | Repellency | measured | After 1st Drum soil | |
|---|---|---|---|---|
| | Water | F (ppm) | Delta E | % cleaner than Untreated |
| Example 1 | 2 | 602 | 35.33 | 17% |
| Example 2 | 2 | 325 | 36.85 | 14% |
| Untreated | 0 | 14 | 42.77 | 0 |
| Example 3 | 0 | Goal-500 | 15.52 | 16% |
| Untreated | 0 | | 18.50 | 0% |

The data in Table 2 demonstrated high levels of soil resistance for the examples of the invention versus untreated carpet with minimal levels of water repellency.

**Claims**

1. A method of providing soil resistance to a fibrous substrate while imparting minimal water repellency comprising contacting the substrate with a copolymer of Fomula I

$$-[R_f\text{-}Q\text{-}OC(O)NHC(CH_3)_2C_6H_4C(CH_3)CH_2\text{-}]_x\text{-}[CH_2C(R)(COOH)\text{-}]_y\text{-} \qquad (I)$$

wherein
$R_f$ is a straight or branched perfluoroalkyl group having from 2 to 8 carbon atoms, or a mixture thereof, which is optionally interrupted by at least one oxygen atom,
Q is alkylene of 1 to 15 carbon atoms, hydroxyalkylene of from 2 to 15 carbon atoms, $-O(C_nH_{2n})$-, $-(CH_2CF_2)_m(CH_2)_n$-, $-OCHFCF_2(CH_2)_n$-, $-CONR^1\text{-}(C_nH_{2n})$-, $-(C_nH_{2n})OCONR^1(C_nH_{2n})$-, $(-CONR^1CH_2)_2CH$-, $-SO_2N(R^1)(C_nH_{2n})$-, or $-(C_nH_{2n})SO_2N(R^1)(C_nH_{2n})$-,
each $R^1$ is independently H or alkyl of 1 to 4 carbon atoms,
each n is independently 1 to 15,
each m is independently 1 to 4, and
R is H or $CH_3$,

x is a positive integer, and

8

y is a positive integer.

2. The method of claim 1 wherein $R_f$ is $C_3F_7$, $C_4F_9$, $C_6F_{13}$, $C_8F_{17}$ or $C_3F_7OCF_2CF_2$

3. The method of claim 1 wherein Q is $-CH_2CH_2-CH_3CH(OH)CH_2-$, $-O(C_nH_{2n})-$, $-(CH_2CF_2)_mCH_2CH_2-$, $-OCHFCF_2CH_2CH_2-$, $-CONHCH_2CH_2-$,$- CH_2CH_2O-CONHCH_2CH_2-$, $(-CONHCH_2)_2CH-$, $-SO_2N(CH_3)CH_2CH_2-$, or $-SO_2N(C_2H_5)CH_2CH_2-$.

4. The method of claim 1 wherein the copolymer is applied in the presence of A) at least one agent which provides a surface effect selected from the group consisting of no iron, easy to iron, shrinkage control, wrinkle free, permanent press, moisture control, softness, strength, anti-slip, antistatic, anti-snag, anti-pill, stain repellency, stain release, soil repellency, soil release, water repellency, oil repellency, odor control, antimicrobial, sun protection, and a combination thereof, or B) at least one of a surfactant, antioxidant, light fastness agent, color fastness agent, water, pH adjuster, cross linker, wetting agent, extender, foaming agent, processing aid, lubricant, blocked isocyanate, nonfluorinated extender, or a combination thereof.

5. A fibrous substrate which has been contacted with a copolymer as defined in claim 1.

6. The method of claim 1 wherein the ratio of x to y is from 0.3 to 1.5.

**Patentansprüche**

1. Verfahren zum Bereitstellen von Schmutzbeständigkeit für ein faseriges Substrat, während minimale Wasserabweisung vermittelt wird, umfassend Inkontaktbringen des Substrats mit einem Copolymer der Formel I

$$-[R_f\text{-}Q\text{-}OC(O)NHC(CH_3)_2C_6H_4C(CH_3)CH_2\text{-}]_x\text{-}[CH_2C(R)(COOH)\text{-}]_y\text{-} \qquad (I)$$

wobei
$R_f$ eine gerade oder verzweigte Perfluoralkylgruppe mit von 2 bis 8 Kohlenstoffatomen, oder ein Gemisch davon, ist, welche gegebenenfalls durch mindestens ein Sauerstoffatom unterbrochen ist,
Q Alkylen mit 1 bis 15 Kohlenstoffatomen, Hydroxyalkylen mit von 2 bis 15 Kohlenstoffatomen, $-O(C_nH_{2n})-$, $-(CH_2CF_2)_m(CH_2)_n-$, $-OCHFCF_2(CH_2)_n-$, $-CONR^1(C_nH_{2n})-$, $-(C_nH_{2n})OCONR^1(C_nH_{2n})-$, $(-CONR^1CH_2)_2CH-$, $-SO_2N(R^1)(C_nH_{2n})-$ oder $-(C_nH_{2n})SO_2N(R^1)(C_nH_{2n})-$ ist,
jedes $R^1$ unabhängig H oder Alkyl mit 1 bis 4 Kohlenstoffatomen ist,
jedes n unabhängig 1 bis 15 ist,
jedes m unabhängig 1 bis 4 ist und
R H oder $CH_3$ ist,
x eine positive ganze Zahl ist und
y eine positive ganze Zahl ist.

2. Verfahren nach Anspruch 1, wobei $R_f C_3F_7$, $C_4F_9$, $C_6F_{13}$, $C_8F_{17}$ oder $C_3F_7OCF_2CF_2$ ist.

3. Verfahren nach Anspruch 1, wobei Q $-CH_2CH_2-$, $CH_2CH(OH)CH_2-$, $-O(C_nH_{2n})-$, $-(CH_2CF_2)_mCH_2CH_2-$, $-OCHFCF_2CH_2CH_2-$, $-CONHCH_2CH_2-$, $-CH_2CH_2O-CONHCH_2CH_2-$, $(-CONHCH_2)_2CH-$, $-SO_2N(CH_3)CH_2CH_2-$ oder $-SO_2N(C_2H_2)CH_2CH_2$ ist.

4. Verfahren nach Anspruch 1, wobei das Copolymer in Gegenwart von A) mindestens einem Mittel, welches eine Oberflächenwirkung, ausgewählt aus der Gruppe, bestehend aus bügelfrei, bügelleicht, Schrumpfungskontrolle, knitterfrei, formbeständig, Feuchtigkeitskontrolle, Weichheit, Festigkeit, anti-Rutsch, antistatisch, anti-Fadenziehen, anti-Pilling, Fleckenabweisung, Fleckenentfernbarkeit, Schmutzabweisung, Schmutzentfernbarkeit, Wasserabweisung, Ölabweisung, Geruchskontrolle, antimikrobiell, Sonnenschutz und einer Kombination davon, bereitstellt, oder B) mindestens einem grenzflächenaktiven Mittel, Antioxidationsmittel, Lichtechtheitsmittel, Farbechtheitsmittel, Wasser, pH-Einstellungsmittel, Vernetzungsmittel, Benetzungsmittel, Streckungsmittel, Schaummittel, Verarbeitungshilfsstoff; Schmiermittel, blockierten Isocyanat, nicht-fluorierten Streckungsmittel oder einer Kombination davon angewendet wird.

5. Faseriges Substrat, welches mit einem Copolymer, wie definiert in Anspruch 1, in Kontakt gebracht worden ist.

**6.** Verfahren nach Anspruch 1, wobei das Verhältnis von x zu y von 0,3 bis 1,5 ist.

**Revendications**

**1.** Procédé de fourniture d'une résistance aux salissures à un substrat fibreux tout en conférant une hydrofugation minimale comprenant la mise en contact du substrat avec un copolymère de formule 1

$$-[R_f\text{-}Q\text{-}OC(O)NHC(CH_3)_2C_6H_4C(CH_3)CH_2\text{-}]_x\text{-}[CH_2C(R)(COOH)\text{-}]_y\text{-} \qquad (I)$$

dans lequel

$R_f$ est un groupe perfluoroalkyle linéaire ou ramifié ayant de 2 à 8 atomes de carbone, ou un mélange de ceux-ci, qui est éventuellement interrompu par au moins un atome d'oxygène,

Q est un groupe alcylène de 1 à 15 atome(s) de carbone, hydroxyalcylène de 2 à 15 atomes de carbone, $-O(C_nH_{2n})$-, $-(CH_2CF_2)_m(CH_2)_n$-, $-OCHFCF_2(CH_2)_n$-, $-CONR^1(C_nH_{2n})$-, $-(C_nH_{2n})OCONR^1C_nH_{2n})$-, $(-CONR^1CH_2)_2CH$-, $-SO_2N(R^1)(C_nH_{2n})$-, ou $-(C_nH_{2n})SO_2N(R^1)(C_nH_{2n})$-,

chaque $R^1$ est indépendamment un atome H ou un groupe alkyle de 1 à 4 atome(s) de carbone,

chaque n prend indépendamment la valeur de 1 à 15,

chaque m prend indépendamment la valeur de 1 à 4, et

R est un atome H ou un groupe $CH_3$.

x est un nombre entier positif, et

y est un nombre entier positif.

**2.** Procédé selon la revendication 1, dans lequel $R_f$ est $C_3F_7$, $C_4F_9$, $C_6F_{13}$, $C_8F_{17}$ ou $C_3F_7OCF_2CF_2$.

**3.** Procédé selon la revendication 1, dans lequel Q est $-CH_2CH_2$-, $CH_2CH(OH)CH_2$-, $-O(C_nH_{2n})$-, $-(CH_2CF_2)_mCH_2CH_2$-, $-OCHFCF_2CH_2CH_2$-, $-CONHCH_2CH_2$-, $-CH_2CH_2O$-$CONHCH_2CH_2$-, $(-CONHCH_2)_2CH$-, $-SO_2N(CH_3)CH_2CH_2$-, ou $-SO_2N(C_2H_5)CH_2CH_2$-.

**4.** Procédé selon la revendication 1, dans lequel le copolymère est appliqué en la présence de A) au moins un agent qui fournit un effet de surface choisi parmi le groupe constitué d'une surface qui ne nécessite pas de repassage, qui est facile à repasser, qui permet de réguler le rétrécissement, qui est infroissable, qui permet le repassage permanent, la régulation de l'humidité, la douceur, la résistance, qui est anti-glissant, antistatique, anti-accroc, anti-bouloche, antitache, qui a une aptitude au détachage, qui est anti-salissant, qui facilite le lavage, qui est hydrofuge, oléofuge, qui possède des propriétés de régulation des odeurs, qui est antimicrobien, qui protège des effets du rayonnement solaire, et une combinaison de ceux-ci, ou B) au moins un tensioactif, antioxydant, agent de résistance à la lumière, agent de solidité des couleurs, de l'eau, d'un agent d'ajustement du pH, d'un agent de réticulation, d'un agent mouillant, d'un diluant, d'un agent moussant, d'un auxiliaire de fabrication, d'un lubrifiant, d'un isocyanate bloqué, d'un diluant non fluoré, ou d'une combinaison de ceux-ci.

**5.** Substrat fibreux qui a été mis en contact avec un polymère tel que défini selon la revendication 1.

**6.** Procédé selon la revendication 1, dans lequel le rapport de x sur y est de 0,3 à 1,5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1996176090 B